# EUROPEAN PATENT APPLICATION

(11) **EP 1 143 710 A2**
(43) Date of publication of application: **10.10.2001**
(21) Application number: 01105915.1
(22) Date of filing: 09.03.2001
(51) Int. Cl.: H04N 5/00

(54) **Transmission terminal device, data distribution system, and reception terminal device**

(30) Priority: 09.03.2000 JP 2000065406
(71) Applicant: MATSUSHITA ELECTRIC INDUSTRIAL CO., LTD., Kadoma-shi, Osaka 571-8501 (JP)
(72) Inventor: Okuno, Maki, Himeji-shi, Hyogo 670-0991 (JP); Kadono, Shinya, Nishinomiya-shi, Hyogo 633-8113 (JP); Matsui, Yoshinori, Ikoma-shi, Nara 630-0212 (JP); Notoya, Youji, Neyagawa-shi, Osaka 572-0055 (JP)
(74) Representative: Holmes, Miles Keeton

(57) **Abstract**

A data distribution system is provided with a data edition unit for editing contents information supplied from a transmission terminal on the basis of edition information to create multimedia data. Among the contents information constituting the created multimedia data, those having relatively small quantity of data are transmitted as first data to a reception terminal, and those having relatively large quantity of data are transmitted as second data to the reception terminal according to data acquisition information supplied from the reception terminal. Therefore, among the multimedia data created at the transmission terminal, character data or the like can be immediately transmitted to the transmission terminal while video data or the like, which takes much time for transmission, can be transmitted according to the convenience of the user at the receiving end.

## Description

### FIELD OF THE INVENTION

The present invention relates to a transmission terminal device, a data distribution system, and a reception terminal device. More particularly, the invention relates to a transmission terminal device capable of creating data of documents including images, sounds, characters, etc. (i.e., multimedia data), a reception terminal device capable of receiving multimedia data, and a data distribution system capable of distributing multimedia data to a reception terminal on the basis of information supplied from a transmission/reception terminal.

### BACKGROUND OF THE INVENTION

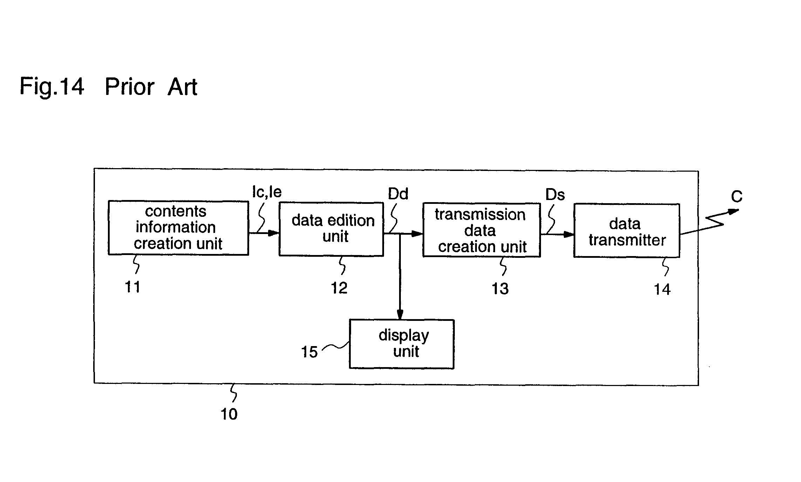

Figure 14 is a block diagram for explaining a conventional transmission terminal device 10.

The transmission terminal device 10 creates document data including image data, audio data, etc. (multimedia data), and transmits the created document data through a server to a reception terminal.

To be specific, the transmission terminal device 10 is provided with a contents creation unit 11 and a data edition unit 12. The contents creation unit 11 creates contents information Ic constituting the document data according to data input operation by user, and outputs the contents information Ic together with edition information Ie used for edition of the contents information Ic to create document data. The data edition unit 12 edits the contents information Ic on the basis of the edition information Ie to create document display data Dd used for display of a document containing the contents. The contents information Ic corresponds to constituents of a multimedia document, such as video data, still-picture data, audio data, character data, etc.

The transmission terminal device 10 further includes a display unit 15 for displaying the multimedia document on the basis of the document display data Dd, a transmission data creation unit 13 for converting the document display data Dd to transmission data Ds, and a data transmitter 14 for transmitting the transmission data Ds as a transmission signal through a communication line to a predetermined server.

In the conventional transmission terminal device 10 so constructed, when the user performs operation to input characters or images as components of a document, the contents information creation unit 11 creates character data or image data as the contents information Ic according to the user operation, and contents information Ic is output to the data edition unit 12 together with edition information Ie for edition of the contents information Ic to create document data.

In the data edition unit 12, the contents information Ic is edited on the basis of the edition information Ie, and document display data Dd for displaying a document containing the contents is created. The document display data Dd is input to the display unit 15 and to the transmission data creation unit 13.

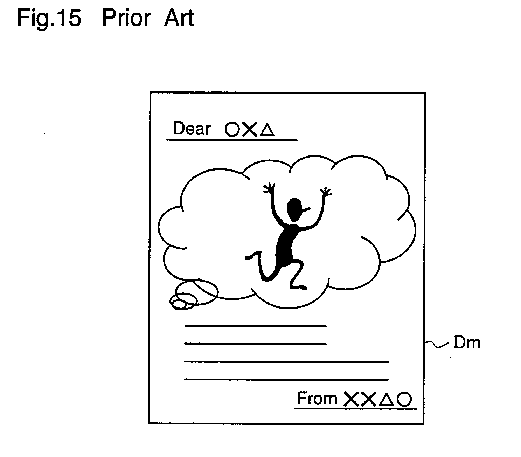

In the display unit 15, a multimedia document Dm as shown in figure 15 is displayed on the basis of the document display data Dd. In the transmission data creation unit 13, the document display data Dd is converted to transmission data Ds.

The transmission data Ds is transmitted through a communication line to a predetermined server by the data transmission unit 14.

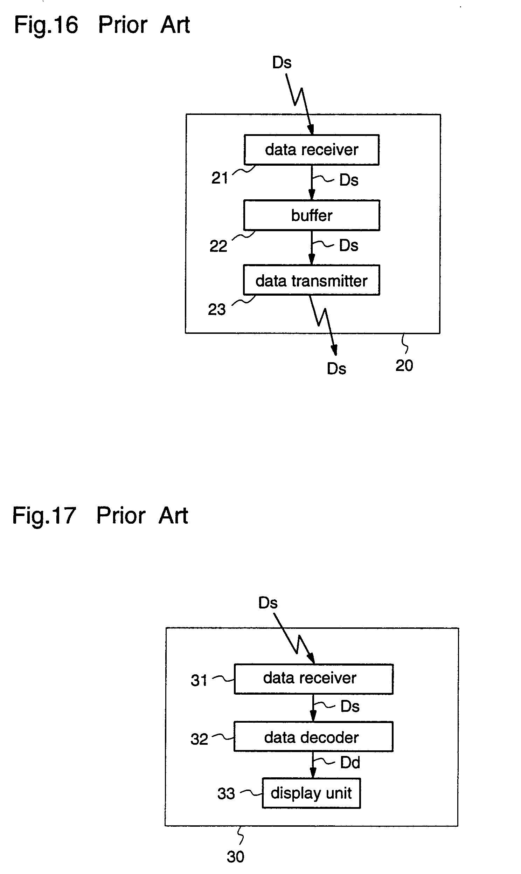

Figure 16 is a block diagram for explaining a conventional server 20.

This server 20 receives the transmission data Ds supplied from the transmission terminal device 10 shown in figure 14, and transmits it to a predetermined reception terminal.

To be specific, the server 20 is provided with a data receiver 21 for receiving the transmission data Ds, a data buffer 22 for temporarily holding the received data Ds, and a data transmitter 23 for transmitting the data Ds stored in the data buffer 22, through a communication line to a predetermined reception terminal.

In the server 20 so constructed, the transmission data Ds from the transmission terminal device 10 is received by the data receiver 21, and the received data Ds is temporarily stored in the buffer 22. The transmission data Ds stored in the buffer 22 is transmitted to the reception terminal through the communication line at a predetermined timing.

Figure 17 is a block diagram for explaining a conventional reception terminal device 30.

The reception terminal device 30 receives the transmission data Ds which has been output from the transmission terminal device 10 and relayed at the server 20 shown in figure 16, and displays the document data.

To be specific, the reception terminal device 30 is provided with a data receiver 31 for receiving the transmission data Ds from the server 20, a data decoder 32 for decoding the received data Ds to convert it to the document display data Dd, and a display unit 33 for displaying a multimedia document on the basis of the document display data Dd.

In the reception terminal device 30 so constructed, the transmission data Ds from the server 20 is received by the data receiver 31. The received data Ds is decoded by the decoder 32 to be converted to the document display data Dd, and the document display data Dd is output to the display unit 33. In the display unit 33, a multimedia document Dm as shown in figure 15 is displayed on the basis of the document display data Dd.

By the way, multimedia data includes information having very large quantity of data, such as video, audio, and the like. Therefore, in an existing conventional data communication system using telephone line or the like, it takes much time to transmit information of such large quantity of data from a transmission terminal to a reception terminal. Under present circumstances, transmission of multimedia data is not practical.

### SUMMARY OF THE INVENTION

The present invention is made to solve the above-described problems and has for its object to provide a transmission terminal device, a data distribution system, and a reception terminal device, which realize efficient transmission of multimedia data including, as contents information, video and/or audio data as well as character data, from the transmitting end to the receiving end.

Other objects and advantages of the invention will become apparent from the detailed description that follows. The detailed description and specific embodiments described are provided only for illustration since various additions and modifications within the scope of the invention will be apparent to those of skill in the art from the detailed description.

According to a first aspect of the present invention, there is provided a transmission terminal device for transmitting document data corresponding to a desired document, through an information processing server, to a reception terminal as a destination, and this device comprises: an information creation unit for creating contents information corresponding to contents of the document, and edition information for edition of the contents information, according to information inputting operation; an information transmitter for transmitting the contents information and the edition information to the information processing server; a display data receiver for receiving display data for display of the document, which is transmitted from the information processing server; and a display unit for displaying the document on the basis of the display data. As described above, the transmission terminal device is provided with the information creation unit, and the contents information and the edition information are transmitted to a server having a function to create the desired document data on the basis of these information, Therefore, when transmitting multimedia data including plural pieces of contents information to the reception terminal, it is only required of the transmission terminal device to transmit the plural pieces of contents information and the edition information to the server, resulting in a reduction in data to be transmitted from the transmission terminal device to the server as compared with the case where the multimedia data is transmitted as it is to the server. Furthermore, since the transmission terminal device is provided with the display data receiver and the document is displayed on the basis of the display data, the document obtained by the edition in the server can be confirmed in the transmission terminal device.

According to a second aspect of the present invention, in the transmission terminal device of the first aspect, the information creation unit comprises a contents information creation section for creating the contents information, and a layout information storage section for holding various kinds of layout information indicating layouts of the contents in the document; specific layout information is read from the layout information storage section, as the edition information; and the information transmitter comprises a layout information transmission section for transmitting the layout information read from the layout information storage unit, to the information processing server, and a contents information transmission section for transmitting the contents information created in the contents creation section, to the information processing server. Therefore, it is not necessary for the server to hold the information indicating the layout of the contents in the document, whereby the quantity of data stored in the server can be reduced.

According to a third aspect of the present invention, in the transmission terminal device of the first aspect, the information transmitter has a transfer information transmission section for transmitting transfer information which designates a server as a destination of the document data created by the information processing server, to the information processing server. Therefore, it is possible to transfer the document data from the transmission-side server to a predetermined reception-side server located in the vicinity of the reception terminal, according to an instruction from the transmission terminal device, whereby the reception terminal can obtain the multimedia data speedily, at low communication cost.

According to a fourth aspect of the present invention, there is provided a data distribution system for receiving transmission information supplied from a transmission terminal, generating document data corresponding to a desired document on the basis of the transmission information, and distributing the document data to a reception terminal as a destination, and this system comprises: an information receiver for receiving the transmission information supplied from the transmission terminal; a data edition unit for generating the document data on the basis of the received transmission information; a display data transmitter for transmitting display data for display of the document, to the transmission terminal; a first data transmitter for transmitting first data as a component of the document data, to the destination reception terminal; and a second data transmitter having a data storage section to hold second data as a component of the document data, and transmitting the second data to the destination reception terminal according to a data request from the destination reception terminal. Therefore, among the document data, character data or the like can be immediately transmitted to the reception terminal while video data or the like, which takes much time for transmission, can be transmitted according to the convenience of the user at the receiving end.

According to a fifth aspect of the present invention, in the data distribution system of the fourth aspect, the information receiver receives, as the transmission information from the transmission terminal, contents information corresponding to contents of the document and layout information indicating the layout of the contents in the document; and the data edition unit edits the contents information on the basis of the layout information to generate the document data. Therefore, when transmitting document data including plural pieces of contents information to the reception terminal, it is only required of the transmission terminal device to transmit the contents information and the layout information to the server, whereby the quantity of data to be transmitted from the transmission terminal device to the server can be reduced as compared with the case whereby the document data is transmitted as it is to the server.

According to a sixth aspect of the present invention, the data distribution system of the fourth aspect further includes a display data transmitter for transmitting display data for display of the document, to the transmission terminal. Therefore, the document data created in the server can be checked at the transmission terminal side.

According to a seventh aspect of the present invention, there is provided a data distribution system having a transmission-side server for receiving transmission information supplied from a transmission terminal and creating document data corresponding to a desired document on the basis of the transmission information, and a reception-side server for relaying the document data to distribute it to a reception terminal as a destination, wherein the transmission-side server comprises: an information receiver for receiving the transmission information from the transmission terminal; a data edition unit for generating the document data on the basis of the transmission information; a first data transmitter for transmitting first data as a component of the document data, to the destination reception terminal; and a first data storage unit for holding second data as a component of the document data; and the reception-side server comprises: a second data storage unit for holding the second data supplied from the transmission-side server; and a second data transmitter for transmitting the second data stored in the second data storage unit to the destination reception terminal, according to a data request from the reception terminal. Therefore, among the multimedia data, character data or the like can be immediately transmitted to the reception terminal while video data or the like, which takes much time for transmission, can be transmitted according to the convenience of the user at the receiving end. Further, by designating a reception-side server located in the vicinity of the reception terminal, the reception terminal can obtain the multimedia speedily at low communication cost.

According to an eighth aspect of the present invention, in the data distribution system of the seventh aspect, the information receiver in the transmission-side server receives, as the transmission information from the transmission terminal, contents information corresponding to contents of the document, and layout information indicating the layout of the contents; and the data edition unit in the transmission-side server edits the contents information on the basis of the layout information to generate the document data. Therefore, when transmitting document data including plural pieces of contents information to the reception terminal, it is only required of the transmission terminal device to transmit the contents information and the layout information to the transmission-side server, whereby the quantity of data to be transmitted from the transmission terminal device to the transmission-side server can be reduced as compared with the case where the document data is transmitted as it is to the server.

According to a ninth aspect of the present invention, in the data distribution system of the seventh aspect, the transmission-side server is provided with a display data transmitter for transmitting display data for display of the document, to the transmission terminal. Therefore, the document data created in the server can be checked at the transmission terminal side.

According to a tenth aspect of the present invention, there is provided a data distribution system for receiving transmission information supplied from a transmission terminal, creating document data corresponding to a predetermined document on the basis of the transmission information, and distributing the document data to a reception terminal as a destination, and the system comprises: an information receiver for receiving the transmission information from the transmission terminal; a layout information storage unit for holding plural pieces of layout information indicating examples of layouts of the contents in the document; a data edition unit for editing the contents information on the basis of the transmission information and the layout information designated by the transmission information; a first data transmitter for transmitting first data as a component of the document data, to the destination reception terminal; and a second data transmitter having a data storage unit for holding second data as a component of the document, and transmitting the second data to the destination reception terminal according to a data request from the reception terminal. Therefore, among the document data, video data or the like, which takes much time for transmission, can be transmitted according to the convenience of the user at the receiving end. Further, since the data distribution system is provided with the layout information storage unit and the contents information is edited on the basis of desired layout information to create the document data, it is not necessary for the transmission terminal end to hold the layout information, whereby the quantity of data stored in the transmission terminal device can be reduced.

According to an eleventh aspect of the present invention, in the data distribution system of the tenth aspect, the information receiver receives, as the transmission information from the transmission terminal, contents information corresponding to the contents of the document, and layout designation information which designates a layout of the contents in the document information; and the data edition unit edits the contents information on the basis of the layout information designated by the layout designation information to generate the document data. Therefore, creation and transmission of layout information becomes unnecessary at the transmission terminal.

According to a twelfth aspect of the present invention, the data distribution system of the tenth aspect further includes a display data transmitter for transmitting display data for display of the document, to the transmission terminal. Therefore, the document data created in the server can be checked at the transmission terminal side.

According to a thirteenth aspect of the present invention, there is provided a data distribution system having a transmission-side server for receiving transmission information supplied from a transmission terminal and creating document data corresponding to a desired document on the basis of the transmission information, and a plurality of reception-side servers for relaying the document data to distribute it to a reception terminal as a destination, wherein the transmission-side server comprises: an information receiver for receiving the transmission information from the transmission terminal; a layout information storage unit for holding plural pieces of layout information indicating examples of layouts of contents in the document; a data edition unit for editing the contents information on the basis of the transmission information and the layout information designated by the transmission information to generate the document data; a first data transmitter for transmitting first data as a component of the document data, to the destination reception terminal; and a first data storage unit for holding second data as a component of the document data; and each of the reception-side servers is provided with a second data storage unit for holding the second data supplied from the transmission-side server, and transmits the second data stored in the second data storage unit to the destination reception terminal, according to a data request from the reception terminal. Therefore, among multimedia data, character data or the like can be immediately transmitted to the reception terminal while video data or the like, which takes much time for transmission, can be transmitted according to the convenience of the user at the receiving end.

According to a fourteenth aspect of the present invention, in the data distribution system of the thirteenth aspect, the transmission-side server is provided with a transfer information receiver for receiving transfer information supplied from the transmission terminal, the transfer information designating a reception-side server as a destination of the second data stored in the first data storage unit, and the second data is transmitted to the reception-side server designated by the transfer information. Therefore, by designating, at the transmitting end, a reception-side server which is located in the vicinity of the reception terminal, the reception terminal can obtain the multimedia data speedily at low communication cost.

According to a fifteenth aspect of the present invention, in the data distribution system of the thirteenth aspect, the transmission-side server is provided with a transfer information receiver for receiving transfer information supplied from the reception terminal, the transfer information designating a reception-side server as a destination of the second data stored in the first data storage unit, and the second data is transmitted to the reception-side server designated by the transfer information. Therefore, by designating, at the receiving end, a reception-side server located in the vicinity of the reception terminal, the reception terminal can obtain the multimedia data speedily at low communication cost.

According to a sixteenth aspect of the present invention, there is provided a reception terminal device for receiving document data corresponding to a specific document, which is obtained by edition in an information processing server on the basis of transmission information supplied from a transmission terminal, and the device comprises: a first receiver for receiving first data as a component of the document data; a first data decoder for decoding the first data, and generating data acquisition information for obtaining second data as a component of the document data; an acquisition information transmitter for transmitting the data acquisition information to the information processing server; a second data receiver for receiving the second data transmitted from the information processing server in response to the transmission of the data acquisition information to the information processing server; a second decoder for decoding the second data; and a display unit for displaying the contents constituting the document, on the basis of the decoded first and second data. Therefore, among the document data supplied from the transmission terminal device, character data or the like can be immediately received by the reception terminal device while video data or the like, which takes much time for reception, can be obtained as necessary on the basis of the contents of the received data.

According to a seventeenth aspect of the present invention, the reception terminal device of the sixteenth aspect further includes a transfer information transmitter for transmitting transfer information designating a destination server to which the second data is to be transmitted, to the information processing server. Therefore, by designating, as a server to which the second data is to be transmitted, a reception-side server which is located in the vicinity of the reception terminal, the reception terminal can obtain the multimedia data speedily at low communication cost.

According to an eighteenth aspect of the present invention, in the data distribution system according to any of the fourth, ninth, and twelfth aspects, the display data transmitter transmits, as the display data for display of the document data, a display program including edition data generated in the data edition unit, or image data indicating the edited document data in the static state, or a digest of the edited document data. Therefore, the quantity of data to be transmitted to the transmission terminal can be reduced.

### BRIEF DESCRIPTION OF THE DRAWINGS

Figure 1 is a block diagram for explaining a transmission terminal device according to a first embodiment of the present invention.

Figure 2 is a block diagram for explaining a data distribution system according to a second embodiment of the present invention.

Figure 3 is a diagram illustrating an example of a template Te stored in a storage unit of the data distribution system.

Figure 4 is a block diagram for explaining a reception terminal device according to a third embodiment of the present invention.

Figure 5 is a block diagram for explaining a transmission terminal device according to a fourth embodiment of the present invention.

Figure 6 is a block diagram for explaining a data distribution system according to a fifth embodiment of the present invention.

Figure 7 is a block diagram for explaining a data distribution system according to a modification of the fifth embodiment.

Figure 8 is a diagram for explaining sixth and seventh embodiments of the present invention, illustrating a data communication system in which a reception-terminal-side server to be a destination of second data included in multimedia data (i.e., data having large quantity of information) can be designated from the transmitter side.

Figure 9 is a block diagram for explaining a transmission terminal device according to the sixth embodiment of the present invention.

Figure 10 is a block diagram for explaining a data distribution system according to the seventh embodiment of the present invention.

Figure 11 is a diagram for explaining eighth and ninth embodiments of the present invention, illustrating a data communication system in which a reception-terminal-side server to be a destination of second data included in multimedia data (i.e., contents information which is large in quantity) can be designated from the receiver side.

Figure 12 is a block diagram for explaining a data distribution system according to the eighth embodiment of the present invention.

Figure 13 is a block diagram for explaining a reception terminal device according to the ninth embodiment of the present invention.

Figure 14 is a block diagram for explaining a conventional transmission terminal device.

Figure 15 is a diagram illustrating display contents of a multimedia document Dm.

Figure 16 is a block diagram for explaining a conventional server.

Figure 17 is a block diagram for explaining a conventional reception terminal device.

Figure 18 is a diagram illustrating the construction of a data communication system in which contents information and edition information (or layout information) are separately transmitted from two or more transmission terminals to a server,.

### DETAILED DESCRIPTION OF THE PREFERRED EMBODIMENTS

Hereinafter, preferred embodiments of the invention will be described.

### [Embodiment 1]

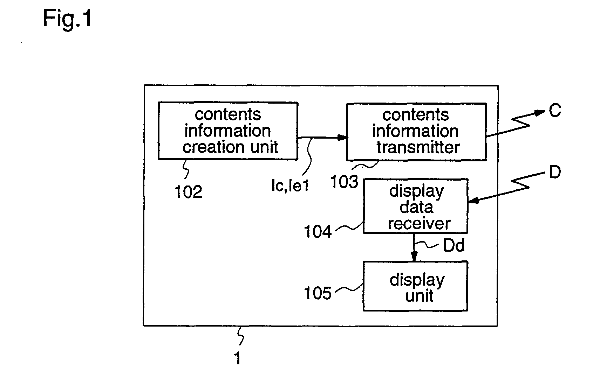

Figure 1 is a block diagram for explaining a transmission terminal device 1 according to a first embodiment of the present invention.

The transmission terminal device 1 creates contents information constituting multimedia data on the basis of user operation, and transmits the created contents information to a server so that the contents information is edited by the server and multimedia data obtained by the edition is transmitted to a reception terminal. The multimedia data is document data corresponding to a multimedia document including, as contents, moving images, still images, sounds, as well as characters. The server is an information processing server having processing functions such as edition of a document.

To be specific, the transmission terminal device 1 includes a contents information creation unit 102, and a contents information transmitter 103. The contents information creation unit 102 creates contents information Ic constituting the abovementioned multimedia data and edition information Ie1 for edition of the contents information Ic, according to user's data-inputting operation, and outputs the contents information Ic together with the edition information Ie1. The contents information transmitter 103 transmits the contents information Ic and the edition information Ie1 as a transmission signal C.

The transmission terminal device 1 further includes a display data receiver 104, and a display unit 105. The display data receiver 104 receives a transmission signal D supplied from the server, and outputs, as display data Dd, the multimedia data obtained by editing the contents information in the server. The display unit 105 displays a multimedia document Dm as shown in figure 15 on the basis of the display data Dd.

Next, the function and effect will be described.

In the transmission terminal device 1 so constructed, when the user performs character or image input operation, the contents information creation unit 102 creates, as contents information Ic, character data or image data as a component of multimedia data, according to the user operation. Further, the unit 102 creates edition information Ie1 to be used for edition of the contents information Ic. Then, the contents information transmitter 103 transmits the contents information Ic and the edition information Ie1, as a transmission signal C, to a predetermined server.

Further, a transmission signal D from the server is received by the display data receiver 105, and the display data receiver 105 outputs, as display data Dd, the multimedia data created by edition of the contents information in the server. Then, the display unit 105 displays the multimedia document on the basis of the display data Dd.

On the other hand, the server transmits the multimedia data obtained by edition of the contents information, to a predetermined reception terminal.

As described above, the transmission terminal device 1 according to the first embodiment is provided with the contents information creation unit 102 for creating the contents information Ic constituting multimedia data and the edition information Ie1 for edition of the contents information Ic, according to user's data-inputting operation, and the contents information Ic and the edition information Ie1 are transmitted to the server so that multimedia data to be generated in the server on the basis of these information are transmitted to the reception terminal. Therefore, when transmitting multimedia data including plural pieces of contents information to the reception terminal, only the plural pieces of contents information and the edition information thereof are transmitted from the transmission terminal device to the server, whereby the quantity of data to be transmitted from the transmission terminal device to the server can be reduced as compared with the case where the whole multimedia data is transmitted to the server.

Further, since the contents information Ic and the edition information Ie1 are created according to user operation, the user can provide the reception terminal with data corresponding to a multimedia document obtained by editing various kinds of contents with an arbitrary layout.

Furthermore, the transmission terminal device 1 is provided with the display data receiver 104 which receives the transmission signal D from the server, and outputs the multimedia data created by the server, as the display data. Therefore, the transmission terminal device can confirm the multimedia data obtained by edition in the server.

Moreover, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Embodiment 2]

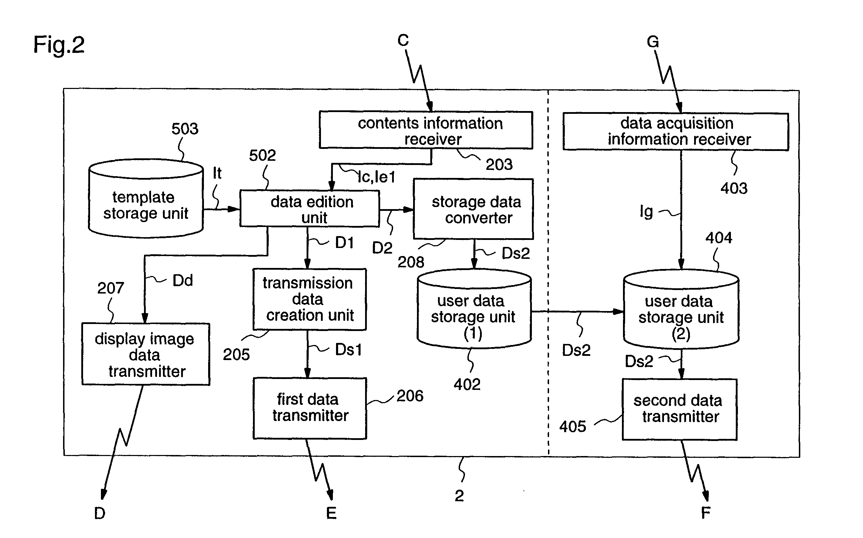

Figure 2 is a block diagram for explaining a data distribution system 2 according to a second embodiment of the present invention.

The data distribution system of this second embodiment receives the transmission signal C supplied from the transmission terminal device 1 of the first embodiment, creates multimedia data on the basis of the transmission signal C, and distributes the created multimedia data to a reception terminal. Further, the data distribution system 2 has a transmission-side server which receives the transmission signal C from the transmission terminal and creates document data corresponding to a required document on the basis of the transmission signal C, and a reception-side server which relays the document data to distribute it to a destination reception terminal.

Hereinafter, this data distribution system 2 will be described in more detail.

The data distribution system 2 is provided with a contents information receiver 203, a template storage unit 503, and a data edition unit 502. The contents information receiver 203 receives the transmission signal C supplied from the transmission terminal device 1 and outputs contents information Ic and edition information Eil. The template storage unit 503 holds various kinds of template information It as samples (templates) Te of layouts of images, characters, etc. in the document. The data edition unit 502 reads desired template information It from the storage unit 503 on the basis of the edition information Ie1, and edits the contents information Ic on the basis of the read template information It to create multimedia data as document data.

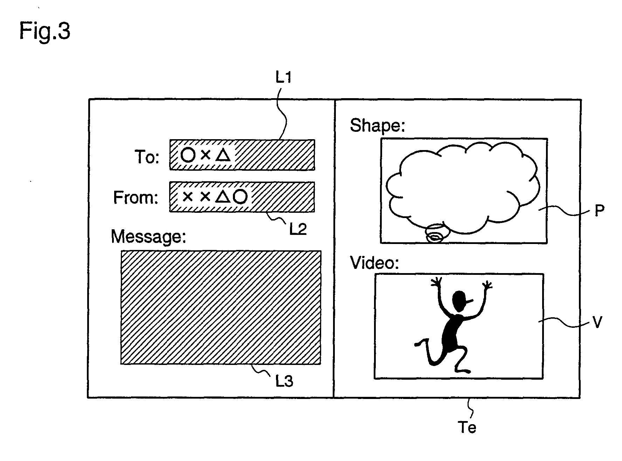

Figure 3 shows an example of a template Te, and the following areas are set within the frame of the template Te: area L1 where information about a destination is described, area L2 where information about a source is described, area L3 where a message is described, area V where a rectangle moving image is shown, and area P where an arbitrary shape to be cut out of the rectangle moving image is shown. Figure 15 shows a document Dm which is obtained by edition of the contents information shown in the respective areas of the template Te.

The data distribution system 2 further includes a transmission data creation unit 205 for converting the first data D1 outputted from the edition unit 502 into first transmission data Ds1, and a first data transmitter 206 for transmitting the first transmission data Ds1 as a transmission signal E to the reception terminal.

The data distribution system 2 further includes a storage data converter 208 for converting the second data D2 outputted from the edition unit 502 into storage data (second transmission data) Ds2 to be stored in a data storage, and a user data storage unit (1) 402 for holding the storage data Ds2.

The data distribution system 2 further includes a display image data transmitter 207 for transmitting the display data Dd to display the multimedia document obtained by the edition in the edition unit 502, as a transmission signal D, to the transmission terminal device 1.

Furthermore, the data distribution system 2 includes a data acquisition information receiver 403, a user data storage unit (2) 404, and a second data transmitter 405. The data acquisition information receiver 403 receives a transmission signal G supplied from the reception terminal, and outputs data acquisition information Ig indicating contents information to be transmitted to the reception terminal. The user data storage unit (2) 404 holds the second transmission data Ds2 supplied from the first data storage unit (1) 402 of the first server, and outputs the second transmission data Ds2 corresponding to desired contents information, on the basis of the data acquisition information Ig. The second data transmitter 405 transmits the second transmission data Ds2 outputted from the user data storage unit (2) 404, as a transmission signal F, to the reception terminal.

In the data distribution system 2, the first server comprises the contents information receiver 203, the template storage unit 503, the data edition unit 502, the transmission data creation unit 205, the first data transmitter 206, the display image data transmitter 207, the storage data converter 208, and the first data storage unit (1) 402. The second server comprises the data acquisition information receiver 403, the user data storage unit (2) 404, and the second data transmitter 405.

The first data D1 is a component of the multimedia data created in the edition unit 502, and this data is very small in quantity and therefore requires little time for transmission to the reception terminal. To be specific, the first data D1 is data that can be transmitted to the reception terminal in a moment, such as information relating to the transmitter, URL, or the like. On the other hand, the second data D2 is also a component of the multimedia data created in the edition unit 502, and this data is very large in quantity and therefore requires much time for transmission to the reception terminal. To be specific, the second data D2 is data that cannot be transmitted to the reception terminal in a moment, such as images or sounds having large quantity of information.

Next, the operation will be described.

First of all, a description will be given of the operation of the first server (transmission-side server) in the data distribution system 2.

When the transmission signal C from the transmission terminal device is received by the contents information receiver 203, the contents information Ic and the edition information Ie1 are outputted from the contents information receiver 203 to the data edition unit 502. In the data edition unit 502, desired template information It is read from the template storage unit 503 on the basis of the edition information Ie1, and the contents information Ic is edited on the basis of the template information It, whereby document data as multimedia data is created.

Further, the data edition unit 502 outputs the display data Dd for display of this document to the display image data transmitter 207, and the transmitter 207 transmits the display data Dd as a transmission signal D to the transmission terminal device.

Furthermore, the data edition unit 502 outputs the first data D1, which is a component of the created multimedia data and is very small in quantity and so requires little time for transmission to the reception terminal, to the transmission data creation unit 205. Further, the edition unit 502 outputs the second data D2, which is a component of the created multimedia data and is very large in quantity and so takes much time for transmission to the reception terminal, to the storage data converter 208.

The first data D1 inputted to the transmission data creation unit 205 is converted to the first transmission data Ds1, and the first transmission data Dsl is transmitted as a transmission signal E from the first data transmitter 206 to the reception terminal.

The second data D2 inputted to the storage data converter 208 is converted to the storage data (second transmission data) Ds2, and the storage data Ds2 is stored in the user data storage unit (1) 402.

Next, a description will be given of the operation of the second server (reception-side server) in the data distribution system 2.

When the second transmission data Ds2 stored in the first data storage unit (1) 402 is transferred from the first server to the second server, the second transmission data Ds2 is stored in the user data storage unit (2) 404.

When the transmission signal G from the reception terminal is received by the data acquisition information receiver 403, the data acquisition information Ig indicating the contents information to be transmitted to the reception terminal is output from the data acquisition information receiver 403 to the user data storage unit (2) 404. In the user data storage unit (2) 404 holding the second transmission data Ds2, only the second transmission data Ds2 corresponding to the desired contents information indicated by the data acquisition information Ig is read and outputted to the second data transmitter 405. In the second data transmitter 405, the second transmission data Ds2 read from the user data storage unit (2) 404 is output as a transmission signal F to the reception terminal.

As described above, the data distribution system 2 of the second embodiment is provided with the data edition unit 502 to edit the contents information Ic supplied from the transmission terminal device on the basis of the edition information Ie1 to create multimedia data, and the first data D1 having relatively small quantity is transmitted to the reception terminal while the second data D2 having relatively large quantity is transmitted to the reception terminal according to the data acquisition information Ig supplied from the reception terminal. Therefore, among the multimedia data, the character data and the like can be immediately transmitted to the reception terminal while the video data and the like, which take much time for transmission, can be transmitted according to the convenience of the user at the receiving end.

Although in this second embodiment the display data Dd is transmitted as the transmission signal D, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Embodiment 3]

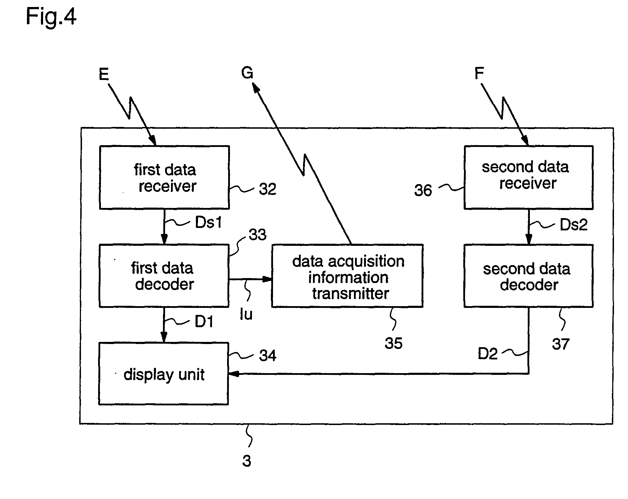

Figure 4 is a block diagram for explaining a reception terminal device 3 according to a third embodiment of the present invention.

The reception terminal device 3 receives the multimedia data created by the data distribution system 2 of the second embodiment, or a part of the multimedia data, on the basis of the transmission signal C supplied from the transmission terminal device 1 of the first embodiment.

To be specific, the reception terminal device 3 is provided with a first data receiver 32, a first data decoder 33, and a data acquisition information transmitter 35. The first data receiver 32 receives a transmission signal E from the data distribution system 2, and outputs first transmission data Ds1. The first data decoder 33 decodes the first transmission data Ds1 to restore the first data D1. The data acquisition information transmitter 35 transmits information for data acquisition, which includes data acquisitor information Iu included in the first transmission data Ds1, as a transmission signal G to the data distribution system 2.

The data acquisitor information Iu is based on information such as URL or the like included in the first transmission data Ds1, and this information is used to obtain the contents information (video, character, etc.) which has been transmitted from the transmission terminal device 1 and stored in a predetermined server in the data distribution system 2.

The reception terminal device 3 further includes a second data receiver 36, a second data decoder 37, and a display unit 34. The second data receiver 36 receives the transmission signal F supplied from the data distribution system 2, and outputs the second transmission data Ds2. The second data decoder 37 decodes the second transmission data Ds2 to restore the second data D2. The display unit 34 displays the contents of the multimedia document Dm or a part of the contents.

Next, the operation will be described.

On receipt of the transmission signal E from the data distribution system 2, the first data receiver 32 outputs the first transmission data Dsl to the first data decoder 33. In the first data decoder 33, the first transmission data Ds1 is decoded to restore the first data D1, and the first data D1 is output to the display unit 34. Further, the data acquisitor information Iu obtained by the decoding of the first transmission data Ds1 is output to the data acquisition information transmitter 35.

In the data acquisition information transmitter 35, the data acquisition information is output as a transmission signal G to a predetermined server in the data distribution system 2, on the basis of the data acquisitor information Iu, according to the user operation.

Further, when the second data receiver 36 receives the transmission signal F which is supplied from the data distribution system 2 according to the transmission of the data acquisition information, the receiver 36 outputs the transmission signal F as the second transmission data Ds2 to the second data decoder 37. In the second data decoder 37, the second transmission data Ds2 is decoded to restore the second data D2, and the second data D2 is output to the display unit 34.

In the display unit 34, the contents of the multimedia document, having relatively small quantity of information, is displayed on the basis of the first data D1. Further, the contents of the multimedia data, having relatively large quantity of information, is displayed on the basis of the second data D2.

As described above, the reception terminal device 3 of this third embodiment is provided with the first data receiver 32 which receives, as the first transmission data Ds1, the first data having relatively small quantity of information and included in the multimedia data supplied from the data distribution system; and the first data decoder 33 which decodes the first transmission data Ds1 to restore the first data D1 and generates the data acquisitor information to obtain the second data having relatively large quantity of information. In this construction, the second data is obtained from the server in the system on the basis of the data acquisitor information, according to the operation at the reception terminal device. Therefore, among the multimedia data supplied from the transmission terminal device, the character data and the like can be received immediately and, further, it is possible to decide whether the video data and the like, which take much time for reception, should be received or not, on the basis of the contents of the received data.

### [Embodiment 4]

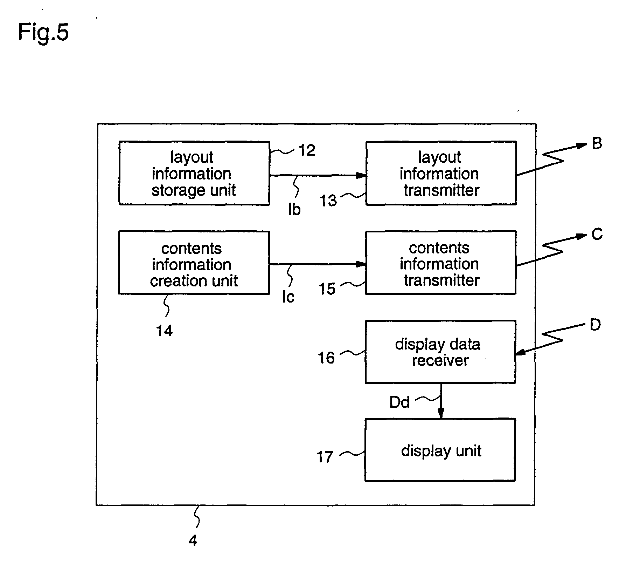

Figure 5 is a block diagram for explaining a transmission terminal device 4 according to a fourth embodiment of the present invention.

The transmission terminal device 4 of this fourth embodiment is provided with a layout information storage unit 12 and a layout information transmitter 13, in addition to the constituents of the transmission terminal device 1 of the first embodiment. The layout information storage unit 12 holds plural pieces of layout information indicating examples of layouts of contents in a document, and the layout information transmitter 13 reads desired layout information Ib from the layout information storage unit 12 according to user operation, and transmits it as a transmission signal B to a data distribution system. The contents information creation unit 14, the contents information transmitter 15, the display data receiver 16, and the display unit 17 are identical to the contents information creation unit 102, the contents information transmitter 103, the display data receiver 104, and the display unit 105 in the transmission terminal device 1 of the first embodiment, respectively. However, the contents information creation unit 14 of this fourth embodiment outputs only the contents information Ic created by user operation while the contents information creation unit 102 of the first embodiment outputs both of the contents information Ic and the edition information Ie1 for edition of the contents information Ic.

The contents information is, for example, information corresponding to the contents of a multimedia document, such as moving images, still images, sounds, characters, etc. Further, the layout information is information indicating the layout of the contents in the document. For example, the layout information indicates how to combine these contents to constitute one multimedia document. To be specific, the layout information corresponds to a template Te (see figure 3) indicating how to combine the contents.

Next, the operation will be described.

When the user performs data input operation, contents information Ic is created in the contents information creation unit 14, and predetermined layout information Ib is taken out of the layout information storage unit 12.

The layout information Ib and the contents information Ic are transmitted as transmission signals B and C, respectively, from the contents information transmitter 15 to a predetermined server in the data distribution system.

On the other hand, in the server, multimedia data is generated by edition of the contents information Ic based on the layout information Ib. At this time, display data Dd to display the multimedia data is transmitted, as a transmission signal D, from the server to the transmission terminal device 4. The display data Dd is received by the display data receiver 16, and outputted to the display unit 17. In the display unit 17, the multimedia data is displayed on the basis of the display data Dd.

As described above, the transmission terminal device 4 of this fourth embodiment is provided with the layout information storage unit 12 which holds plural pieces of layout information indicating examples of layouts of the contents in the multimedia document. In this construction, the contents information Ic constituting the multimedia data (document data) is created according to user operation, and desired layout information is read out of the layout information storage unit 12, and the contents information and the layout information are transmitted to the server so that the server can edit the multimedia data on the basis of these information. Therefore, transmission of the contents information and the layout information to the server is all required of the transmission terminal device to transmit desired multimedia data edited at the server to the reception terminal.

Although in this fourth embodiment the display data Dd is transmitted as the transmission signal D from the server, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Embodiment 5]

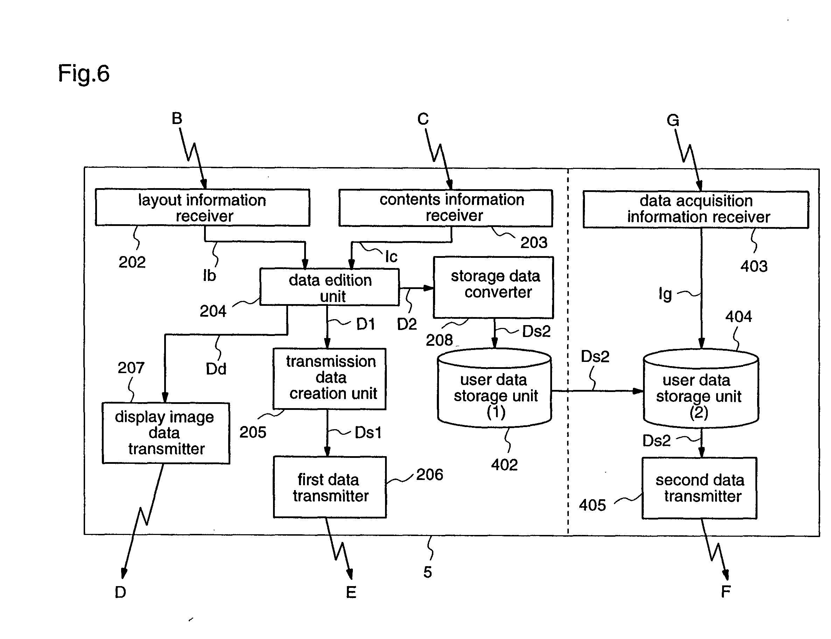

Figure 6 is a block diagram for explaining a data distribution system according to a fifth embodiment of the present invention.

The data distribution system of this fifth embodiment receives the transmission signals B and C corresponding to the layout information and the contents information outputted from the transmission terminal device 4 of the fourth embodiment, and creates multimedia data on the basis of the transmission signals B and C, and distributes the multimedia data to a reception terminal. The reception terminal is identical in structure to the reception terminal device 3 according to the third embodiment.

The data distribution system 5 includes a layout information receiver 202 for receiving the transmission signal B supplied from the transmission terminal device 4 and outputting the layout information Ib, instead of the template storage unit 503 in the data distribution system 2 of the second embodiment, and further includes a data edition unit 204 for editing the contents information Ic supplied from the transmission terminal device on the basis of the layout information Ib to create multimedia data as document data, instead of the data edition unit 502 in the data distribution system 2 of the second embodiment.

Other constituents of the data distribution system 5 are identical to those of the data distribution system 2 of the second embodiment.

Next, the operation will be described.

In the data distribution system 5, the layout information receiver 202 receives the transmission signal B outputted from the transmission terminal device 4, and the receiver 202 outputs the layout information Ib to the data edition unit 204. Further, the contents information receiver 203 receives the transmission signal C outputted from the transmission terminal device 4, and the receiver 203 outputs the contents information Ic to the data edition unit 204.

In the data edition unit 204, the contents information Ic is edited on the basis of the layout information Ib, whereby document data as multimedia data is created.

Further, the display data Dd for display of the multimedia document is output from the data edition unit 204 to the display image data transmitter 207, and the display data Dd is transmitted as a transmission signal D from the transmitter 207 to the transmission terminal device.

The operation of the data distribution system 5 other than mentioned above is identical to that of the data distribution system 2 according to the second embodiment.

As described above, the data distribution system 5 of this fifth embodiment is provided with the layout information receiver 202 which receives the transmission signal B from the transmission terminal device 4 to output the layout information Ib; the contents information receiver 203 which receives the transmission signal C from the transmission terminal device 4 to output the contents information Ic; and the data edition unit 204 which edits the contents information Ic on the basis of the layout information Ib to create multimedia data as document data. In this construction, the first data which is a component of the created multimedia data and is relatively small in quantity is transmitted to the reception terminal, and the second data which is relatively large in quantity is transmitted to the reception terminal according to the data acquisition information Ig supplied from the reception terminal. Therefore, among the multimedia data, the character data and the like can be immediately transmitted to the reception terminal while the video data and the like, which take much time for transmission, can be transmitted according to the convenience of the user at the receiving end.

Although in this fifth embodiment the display data Dd is transmitted as the transmission signal D, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Modification of Embodiment 5]

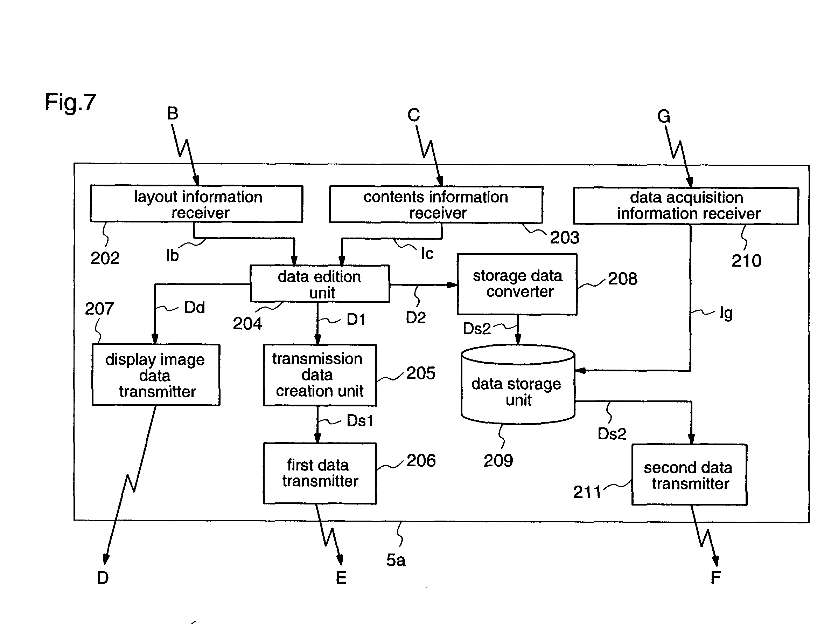

Figure 7 is a block diagram for explaining a data distribution system 5a according to a modification of the fifth embodiment of the invention.

In the data distribution system 5a according to this modification, a single server is employed instead of the first and second servers in the data distribution system 5 of the fifth embodiment.

The data distribution system 5a according to the modification of the fifth embodiment is provided with a single second data storage unit 209, instead of the user data storage unit (1) 402 and the user data storage unit (2) 404 in the data distribution system 5 of the fifth embodiment. Other constituents of the data distribution system 5a are identical to those of the data distribution system 5 of the fifth embodiment. That is, a data acquisition information receiver 210 and a second data transmitter 211 are identical in structure to the data acquisition information receiver 403 and the second data transmitter 405 of the fifth embodiment.

The second data storage unit 209 holds the storage data Ds2 supplied from the storage data converter 208, and outputs storage data Ds2 corresponding to desired contents information to the second data transmitter 211 on the basis of the data acquisition information Ig from the data acquisition information receiver 210. Further, in the data distribution system 5a, a single server comprises the layout information receiver 202, the contents information receiver 203, the data edition unit 204, the transmission data creation unit 205, the first data transmitter 206, the display image data transmitter 207, the storage data converter 208, the data storage unit 209, the data acquisition information receiver 210, and the second data transmitter 211.

Next, the operation will be described.

The operation of the data distribution system 5a is different from that of the data distribution system 5 of the fifth embodiment in that the storage data Ds2 corresponding to desired contents information is output directly from the storage unit 209 that holds the storage data Ds2 outputted from the storage data converter 208, according to the data acquisition information Ig from the data acquisition information receiver 210, to the second data transmitter 211.

As described above, the data distribution system 5a according to the modification of the fifth embodiment is provided with the layout information receiver 202 which receives the transmission signal B from the transmission terminal device 4 and outputs the layout information Ib, the contents information receiver 203 which receives the transmission signal C from the transmission terminal device 4 and outputs the contents information Ic, and the data edition unit 204 which edits the contents information Ic on the basis of the layout information Ib to create multimedia data as document data. In this structure, the first data which is a component of the created multimedia data and is relatively small in quantity is transmitted to the reception terminal, and the second data which is relatively large in quantity is transmitted to the reception terminal according to the data acquisition information Ig supplied from the reception terminal. Therefore, as in the fifth embodiment, among the multimedia data, the character data and the like can be immediately transmitted to the reception terminal while the video data and the like, which take much time for transmission, can be transmitted according to the convenience of the user at the receiving end.

Further, the data distribution system 5a comprising a single server is serviceable in a local network.

In a data communication system comprising the transmission terminal device according to the first or fourth embodiment, the data distribution system according to the second or fifth embodiment, and the reception terminal device according to the third embodiment, the second data as a component of the multimedia data transmitted to the server on the transmission terminal side is transferred to a predetermined server on the reception terminal side. However, a server on the reception terminal side, to which the second data is to be transmitted, may be designated from the transmission terminal device or the reception terminal device.

In such construction, it is possible to meet the demand for high-speed data transmission and low communication cost to the data communication system, without complicating the construction of the system.

For example, when the second data transmitted to the server on the transmission terminal side is transferred to the server on the reception terminal side which is located in the vicinity of the destination reception terminal device, the reception terminal device can obtain the data speedily at reduced communication cost, whereby it can receive desired data satisfactorily. In this case, the transmitter should obtain the information on the receiver in advance so that the transmitter can designate the destination of the second data.

Hereinafter, a description will be given of a transmission terminal device, a data distribution system, and a reception terminal device, which are constituents of a data communication system in which the transmitter or the receiver can designate a server on the reception terminal side to which the second data is transmitted.

### [Embodiment 6]

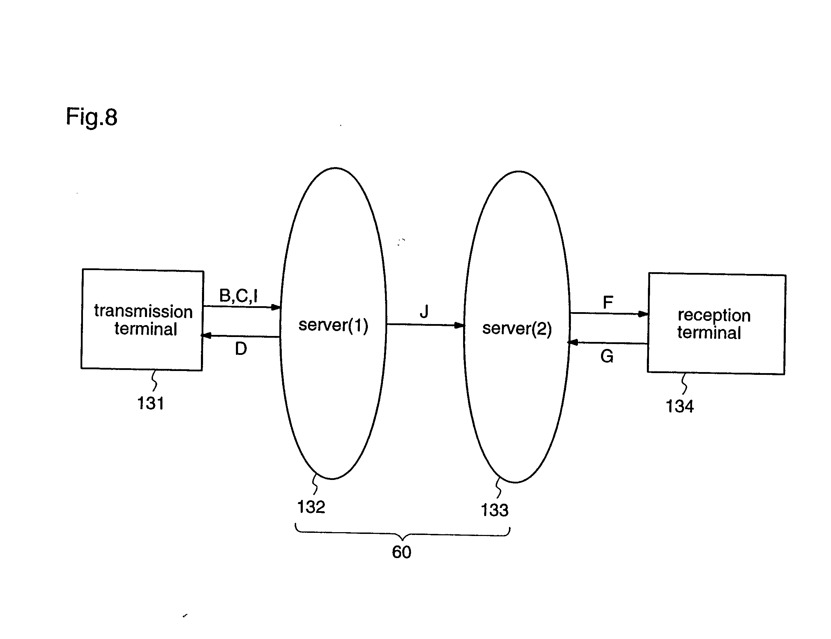

Figure 8 is a block diagram illustrating a data transmission system in which the transmitter can designate a server on the , reception terminal side to which the second data included in the multimedia data (i.e., data having relatively large quantity of information) is to be transmitted.

The data communication system comprises a transmission terminal 131 capable of transmitting transfer information relating to the destination of the second data, as a transmission signal I, to a transmission-side server (server (1)) 132; a data distribution system 60 for creating multimedia data on the basis of a transmission signal C supplied from the transmission terminal 131; and a reception terminal 134 for receiving the multimedia data. The data distribution system 60 includes the transmission-side server (server (1)) 132 and a reception-side server (server (2)) 133, and transmits data (storage data) relating to a part of the contents information constituting the multimedia data, from the transmission-side server 132 to the predetermined reception-side server 133 on the basis of the transmission signal I. Further, the transmission terminal 131 is able to transmit the transfer information for designating the destination of the storage data, as the transmission signal I, to the transmission-side server 132 in the data distribution system 60.

The reception terminal 134 is identical in structure to the reception terminal device 3 of the third embodiment.

Although the data communication system shown in figure 8 has one transmission-side server and one reception-side server, an actual data communication system includes plural transmission-side servers and plural reception-side servers.

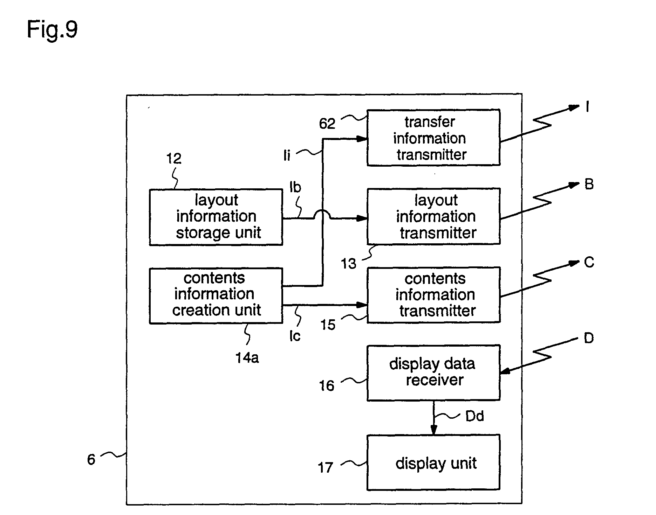

Figure 9 is a block diagram for explaining a transmission terminal device 6 according to the sixth embodiment of the invention.

The transmission terminal device 6 is used as the transmission terminal 131 in the data communication system shown in figure 8. The device 6 includes a transfer information transmitter 62 for transmitting transfer information Ii inputted by user operation, as a transmission signal I, to the data distribution system 60, in addition to the constituents of the transmission terminal device 4 of the fourth embodiment shown in figure 5, and includes a contents information creation unit 14a for creating contents information Ic according to user operation as well as the transmission information Ii, instead of the contents information creation unit 14 of the fourth embodiment.

Other constituents of the transmission terminal device 6 of this sixth embodiment are identical to those of the transmission terminal device 4 of the fourth embodiment.

Next, the operation will be described.

In the transmission terminal device 6, the contents information creation unit 14a creates the contents information Ic included in the document data, and the transfer information Ii indicating the destination of the second data which is included in the document data and has relatively large quantity of information, according to user's data-inputting operation. The contents information Ic is output to the contents information transmitter 15 while the transfer information Ii is output to the transfer information transmitter 62.

Further, desired layout information Ib to be used for creation of the document data is taken out of the layout information storage unit 12 according to user operation, and the layout information Ib is output to the layout information transmitter 13.

Thereafter, the contents information Ic, the layout information Ib, and the transfer information Ii are transmitted from the corresponding transmitters 15, 13, and 62 to the transmission-side server 132 of the data distribution system 60, as transmission signals C, B, and I, respectively.

On the other hand, in the transmission-side server 131, the contents information Ic is edited on the basis of the layout information Ib to create the document data, and the display data for display of the created document is transmitted to the transmission terminal device 6. In the transmission-side server 131, the second data as a component of the created document data is transmitted to another server having an address designated by the transfer information I.

As described above, the transmission terminal device 6 of this sixth embodiment is provided with the transfer information transmitter 62 for transmitting the transfer information I indicating the address of the destination of the second data included in the document data, to the transmission-side server of the data distribution system, in addition to the constituents of the transmission terminal device of the fourth embodiment. Therefore, only transmission of the contents information and the layout information to the transmission-side server is required of the transmission terminal device to make the transmission-side server create desired multimedia data and transmit the multimedia data to the reception terminal. In addition, a server on the reception terminal side, which is close to the reception terminal, can be designated as the destination of the second data, whereby the reception terminal can obtain the multimedia data speedily at low communication cost.

### [Embodiment 7]

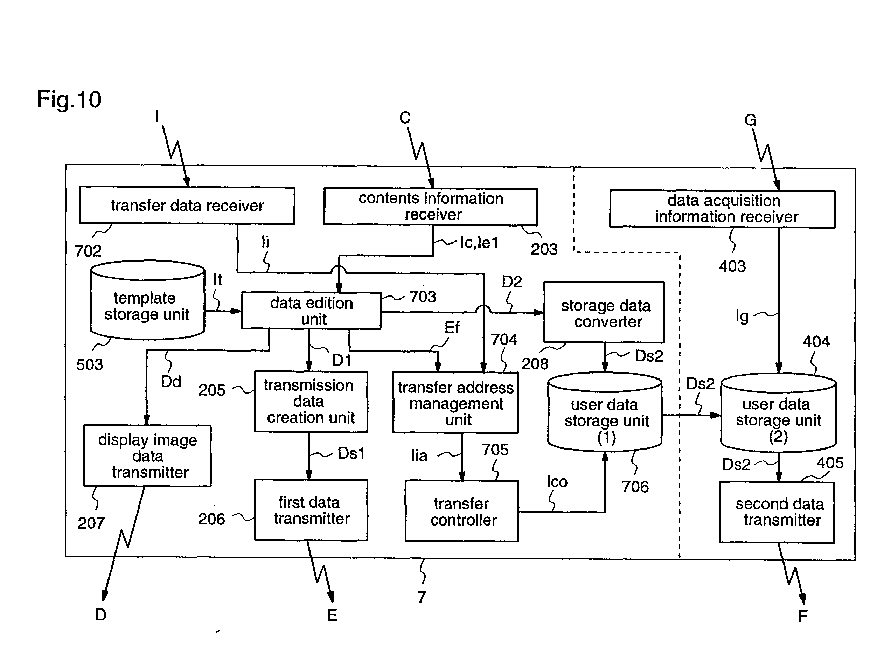

Figure 10 is a block diagram for explaining a data distribution system 7 according to a seventh embodiment of the present invention.

The data distribution system 7 is used as a data distribution system 60 in the data communication system shown in figure 8. The data distribution system 7 receives the transmission signals C and I outputted from the transmission terminal device 6 of the sixth embodiment, creates multimedia data on the basis of the transmission signal C, and distributes the created multimedia data to the reception terminal through a reception-side server designated by the transmission signal I.

To be specific, the data distribution system 7 is provided with a transfer data receiver 702, a transfer address management unit 704, and a transfer controller 705, in addition to the constituents of the data distribution system 2 according to the second embodiment. The transmission data receiver 702 receives the transmission signal I supplied from the transmission terminal device 6, and outputs transfer information Ii. The destination address management unit 704 generates, at a predetermined timing, a transfer address Iia of a reception-side server to which the second data is to be transferred, on the basis of the transfer information Ii. The transfer controller 705 outputs a control signal Ico for transferring the storage data Ds2 from the user data storage unit (1) 706 in the transmission-side server to the user data storage unit (2) 404 in the reception-side server, on the basis of the transfer address Iia, to the user data storage unit 706.

Further, in this seventh embodiment, the data edition unit 703 creates multimedia data as document data on the basis of the edition information Ie1 and the contents information Ic, and outputs a data edition completion signal Ef to the transfer address management unit 704 at the time when the creation of multimedia data is completed. Further, on recept of the data edition completion signal Ef, the transfer address management unit 704 outputs a transfer address signal Iia to the transfer controller 705.

Other constituents of the data distribution system 7 are identical to those of the data distribution system 2 of the second embodiment.

Next, the operation will be described.

When the transmission signal C supplied from the transmission terminal device is received by the contents information receiver 203, the data edition unit 703 performs edition using predetermined template information It stored in the template storage unit 503, on the basis of the contents information Ic and the edition information Ie1 outputted from the receiver 203, whereby multimedia data is created. At this time, the data edition unit 703 outputs the first data D1 and the second data D2 constituting the multimedia data to the first data creation unit 205 and the storage data converter 208, respectively, and outputs the display data Dd for display of the multimedia document to the display image data transmitter 207. Further, when the creation of the multimedia data is completed, the edition unit 703 outputs the edition completion signal Ef to the transfer address management unit 704.

Further, in the first data creation unit 205, the first data D1 is converted to the transmission data Ds1, and the transmission data Ds1 is transmitted as a transmission signal E from the first data transmitter 206 to the transmission terminal device. Further, the display data Dd is transmitted as a transmission signal D from the display image data transmitter 207 to the transmission terminal device. Furthermore, in the storage data converter 208, the second data D2 is converted to the storage data Ds2, and the storage data Ds2 is stored in the user data storage unit 706.

On receipt of the edition completion signal Ef, the transfer address management unit 704 generates an address signal Iai indicating a destination server to which the storage data Ds2 is to be transmitted, on the basis of the transfer information Ii from the transfer data receiver 702. Then, the transfer controller 705 outputs, to the user data storage unit 706, a control signal Ico for transferring the second transmission data (storage data) Ds2 stored in the user data storage unit 706 to a reception-side server designated by the address signal Iai. Then, the user data storage unit 706 transfers the second transmission data Ds2 to the reception-side server having the address indicated by the address signal Iai, on the basis of the control signal Ico. When the second transmission data Ds2 is transferred to the reception-side server, the data Ds2 is stored in the user data storage unit 404 of this server.

When the transmission signal G from the reception terminal is received by the data acquisition information receiver 403, the data acquisition information receiver 403 outputs the data acquisition information Ig indicating the contents information to be transmitted to the reception terminal, to the user data storage unit (2) 404. In the user data storage unit (2) 404 holding the second transmission data Ds2, the second transmission data Ds2 corresponding to the desired contents information is output to the second data transmitter 405 on the basis of the data acquisition information Ig. The second data transmitter 405 transmits the second transmission data Ds2 supplied from the user data storage unit (2) 404, as a transmission signal F, to the reception terminal.

The reception terminal device adapted to the data distribution system 7 is identical in structure to the reception terminal device 3 of the third embodiment. In the reception terminal device, the multimedia data is displayed on the basis of the transmission signals E and F from the data distribution system 7.

Hereinafter, a description will be briefly given of data transmission in a data communication system including the transmission terminal device 6 of the sixth embodiment (transmission terminal 131), the data distribution system 7 of the seventh embodiment (data distribution system 60), and the reception terminal device 3 of the third embodiment (reception terminal 134).

The transmission terminal 131 transmits the transmission signals B, C, and I as the layout information Ib, the contents information Ic, and the transfer information Ii, respectively, to the transmission-side server (server (1)) 132 in the data distribution system. Then, the transmission-side server 132 transmits the second data included in the multimedia data created by the server 132, as a transmission signal J, to the reception-side server (server (2)) 133 designated by the transfer information Ii.

On the other hand, the display data Dd for display of the created multimedia document is transmitted as a transmission signal D from the transmission-side server 132 to the transmission terminal 131. Further, the transmission signal G transmitted as the data acquisition information Ig from the reception terminal 134 is received by the reception-side server 133, and the second data is transmitted as a transmission signal F to the reception terminal 134 on the basis of the data acquisition information Ig.

As described above, the data distribution system 7 of this seventh embodiment is provided with, in addition to the constituents of the data distribution system 2 of the second embodiment, the transfer data receiver 702 which receives the transmission signal I supplied from the transmission terminal device 6 of the sixth embodiment, and outputs the transfer information Ii; and the transfer address management unit 704 which generates a transfer address Iia of a reception-side server as the destination of the storage data Ds2, on the basis of the transfer information Ii. In this construction, the user data storage unit 706 is controlled so that the storage data Ds2 is transferred from the transmission-side server to the reception-side server, on the basis of the transfer address Iia. Therefore, in addition to the effects achieved by the second embodiment, it is possible to designate a reception-side server from the transmission terminal side. When the transmission terminal designates a reception-side server located close to the reception terminal as a destination of the storage data Ds2, the reception terminal can obtain the multimedia data speedily at reduced communication cost.

While in the data distribution system of this seventh embodiment the storage data Ds2 is transferred to a desired reception-side server on the basis of the transfer information Id supplied from the transmission terminal device, a reception-side server to be a destination of the storage data Ds2 may be designated from the reception terminal side.
Although in this seventh embodiment the display data Dd is transmitted as the transmission signal D, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Embodiment 8]

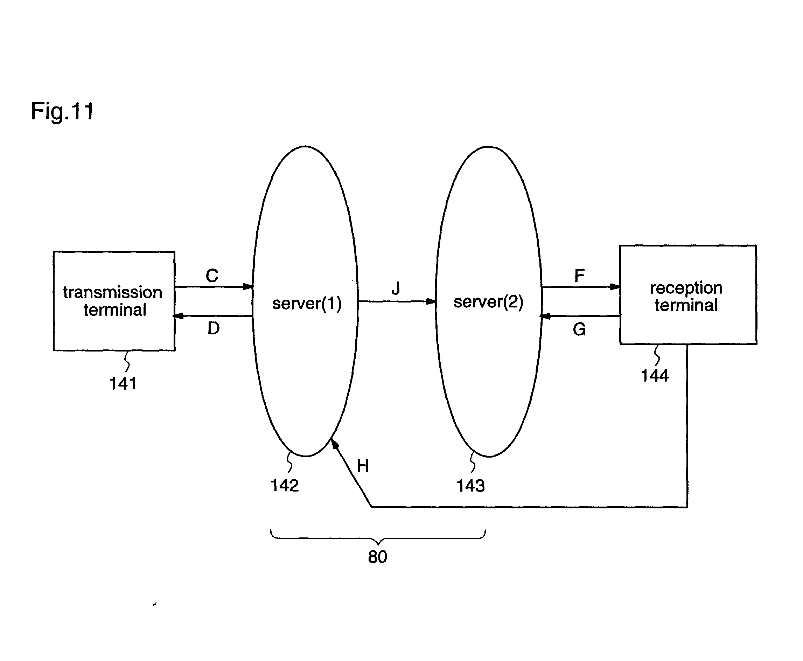

Figure 11 is a block diagram illustrating a data communication system in which the receiver can designate a server on the reception terminal side, which is a destination of the second data included in the multimedia data (i.e., data having a relatively large quantity of information).

The data transmission system comprises a transmission terminal 141 having the same structure as the transmission terminal device 4 of the fourth embodiment, a data distribution system 80 for creating multimedia data on the basis of a transmission signal C supplied from the transmission terminal 141, and a reception terminal 144 for receiving the multimedia data. The data distribution system 80 includes a transmission-side server 142 and a reception-side server 143, and transmits data (storage data) relating to a part of the contents information constituting the multimedia data, from the transmission-side server 142 to a predetermined reception-side server 143, on the basis of a transfer signal H. Further, the reception terminal 144 is able to transmit the transfer information for designating the destination of the storage data, as the transmission signal H, to the transmission-side server 142 in the data distribution system 80.

Although the data distribution system has one transmission-side server and one reception-side server in the data communication system shown in figure 11, the data distribution system has plural transmission-side servers and plural reception-side servers in an actual data communication system.

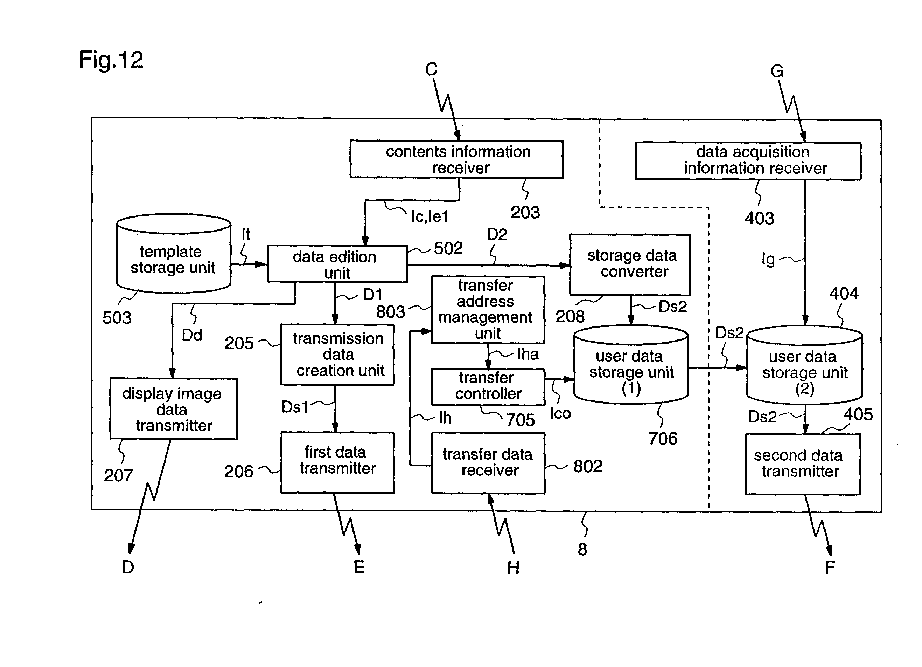

Figure 12 is a block diagram for explaining a data distribution system 8 according to the eighth embodiment of the invention.

The data distribution system 8 is used as a data distribution system 80 in the data communication system shown in figure 11. The data distribution system 8 receives the transmission signal C from the transmission terminal device 4 of the fourth embodiment, creates multimedia data on the basis of the transmission signal C, and distributes the created multimedia data to the reception terminal through a reception-side server designated on the basis of the transmission signal H from the reception terminal.

To be specific, the data distribution system 8 includes a transfer data receiver 802, a transfer address management unit 803, and a transfer controller 705, in addition to the constituents of the data distribution system 2 of the second embodiment. The transfer data receiver 802 receives the transmission signal H supplied from the reception terminal, and outputs transfer information Ih. The transfer address management unit 803 generates a transfer address Iha of a reception-side server to be a destination of the storage data Ds2, on the basis of the transfer information Ih. The transfer controller 705 outputs a control signal Ico for transferring the storage data Ds2 from the user data storage unit (1) 706 of the transmission-side server to the user data storage unit (2) 404 of the reception-side server, on the basis of the transfer address Iha, to the user data storage unit 706.

Other constituents of the data distribution system 8 of this eighth embodiment are identical to those of the data distribution system 2 of the second embodiment.

Next, the operation will be described.

When the contents information receiver 203 receives the transmission signal C from the transmission terminal device 4 and outputs the contents information Ic and the edition information Ie1, the data edition unit 502 creates multimedia data on the basis of these information. Then, the display image data transmitter 207 transmits the display data Dd for display of the multimedia document, as a transmission signal D, to the transmission terminal device. Further, the first data D1 as a component of the multimedia data is transmitted as transmission data Ds1 to the reception terminal, and the second data D2 as a component of the multimedia data is converted to storage data Ds2 to be stored in the user data storage unit (1) 706. The above operation is identical to that of the data distribution system 2 of the second embodiment.

In this eighth embodiment, when the transmission signal H from the reception terminal is received by the transfer data receiver 802, the transfer address management unit 704 generates an address signal Iha indicating a destination server to which the storage data Ds2 is to be transmitted, on the basis of the transfer information Ih outputted from the transfer data receiver 802, and outputs the address signal Iha to the transfer controller 705. Then, the transfer controller 705 outputs, to the user data storage unit 706, a control signal Ico for transferring the second transmission data (storage data) Ds2 stored in the user data storage unit 706 to the reception-side server indicated by the address signal Iha. In the user data storage unit 706, the second transmission data Ds2 is transferred to the reception-side server having the address indicated by the address signal Iha, on the basis of the control signal Ico. In the reception-side server, the second transmission data Ds2 is stored in the user data storage unit 404.

When the transmission signal G from the reception terminal is received by the data acquisition information receiver 403, the data acquisition information Ig indicating the contents information to be transmitted to the reception terminal is output from the data acquisition information receiver 403 to the user data storage unit (2) 404. In the user data storage unit (2) 404 holding the second transmission data Ds2, second transmission data Ds2 corresponding to desired contents information is output to the second data transmitter 405 on the basis of the data acquisition information Ig. The second data transmitter 405 transmits the second transmission data Ds2 supplied from the user data storage unit (2) 404, as a transmission signal F, to the reception terminal.

As described above, the data distribution system 8 of this eighth embodiment is provided with, in addition to the constituents of the second embodiment, the transfer data receiver 802 which receives the transmission signal H supplied from the reception terminal and outputs the transfer information Ih; and the transfer address management unit 803 which generates the transfer address Iha indicating a reception-side server as a destination of the storage data Ds2. In this construction, the storage data Ds2 is transferred from the transmission-side server to a desired reception-side server on the basis of the transfer address Iha. Therefore, in addition to the effects achieved in the second embodiment, it is possible to designate a reception-side server from the reception terminal side, and the reception terminal can obtain the multimedia data speedily at low communication cost when a reception-side server close to the reception terminal is designated as a destination of the storage data Ds.
Although in this eighth embodiment the display data Dd is transmitted as the transmission signal D, since the contents information itself is present on the transmission terminal side, it is only required of the server to transmit, as the transmission signal D, a program including edition data at the server, thereby to make the transmission terminal generate the display data. Accordingly, by transmitting the program including the edition data at the server as the transmission signal D from the server, the quantity of data to be transmitted from the server to the transmission terminal is reduced. Further, the server may transmit, as the transmission signal D, image data showing the static state of the document data edited at the server, or a digest of the edited document data.

### [Embodiment 9]

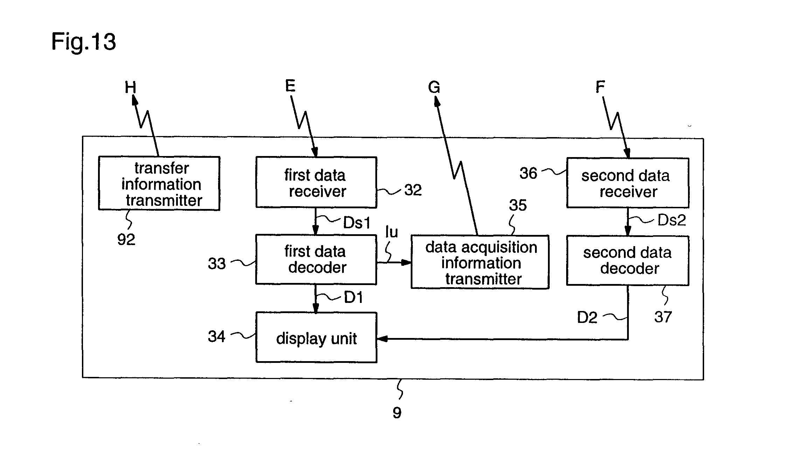

Figure 13 is a block diagram for explaining a reception terminal device 9 according to a ninth embodiment of the present invention.

The reception terminal device 9 is used as the reception terminal 144 in the data communication system shown in figure 11. The reception terminal device 9 includes a transfer information transmitter 92 for transmitting transfer information which is inputted by user operation, as a transmission signal H, to the data distribution system, in addition to the constituents of the reception terminal device 3 of the third embodiment. The transfer information is information designating a destination (reception-side server) to which the storage data Ds2 is to be transmitted, in the data distribution system 8 of the eighth embodiment.

Next, the operation will be described.

In this ninth embodiment, reception of the transmission signals E and F from the data distribution system 8, display of the contents in the multimedia document on the basis of these signals, and transmission of the transmission signal G as the data acquisition information, are performed in the same way as described for the reception terminal device 3 of the third embodiment.

In the reception terminal device 9, the transfer information transmitter 92 transmits, as the transmission signal H, the transfer information indicating a destination (reception-side server) to which the storage data is to be transmitted, to the data distribution system 8.

As described above, the reception terminal device 9 of this ninth embodiment is provided with, in addition to the constituents of the reception terminal device 3 of the third embodiment, the transfer information transmitter 92 which transmits the transfer information indicating a destination (reception-side server) to which the storage data is to be transmitted from the transmission-side server of the data distribution system, as the transmission signal H, to the transmission-side server. Therefore, when a reception-side server close to the reception terminal is designated as a destination server to which the storage data Ds2 is to be transmitted, the reception terminal can obtain the multimedia data speedily, at reduced communication cost.

Hereinafter, a description will be briefly given of data transmission in a data communication system comprising the transmission terminal device 4 of the fourth embodiment (transmission terminal 141), the data distribution system 8 of the eighth embodiment (data distribution system 80), and the reception terminal device 9 of the ninth embodiment (reception terminal 143).

The transmission signal C is transmitted as the layout information Ib and the contents information Ic from the transmission terminal 141 to the transmission-side server (server (1)) 142 in the data distribution system. Then, the second data, included in the multimedia data created by the server 142, is transmitted as a transmission signal J from the transmission-side server 142 to the reception-side server (server (2)) 143 designated by the transfer information Ih supplied from the reception terminal side.

On the other hand, the display data D for display of the created multimedia document is transmitted from the transmission-side server 142 to the transmission terminal 141. Further, the transmission signal G supplied from the reception terminal 144 as the data acquisition information Ig is received by the reception-side server 143, and the transmission signal F corresponding to the second data is transmitted to the reception terminal 144 on the basis of the data acquisition information Ig.

Moreover, when the transfer information is transmitted as the transmission signal H from the reception terminal 144 to the transmission-side server 142, the transmission-side server 142 outputs the second data, among the multimedia data created in the server 142, as the transmission signal J, to the reception-side server 143 designated by the transfer information Ih.

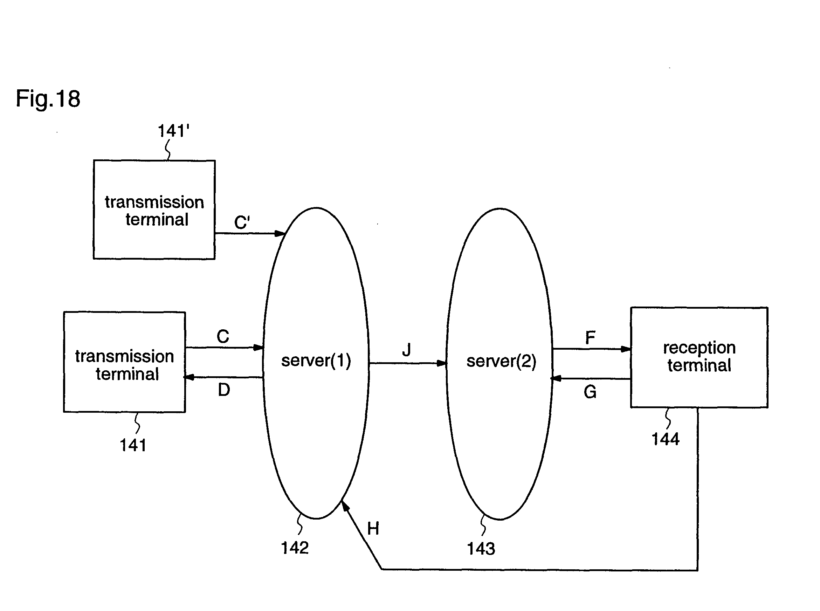

While in the aforementioned embodiments the contents information and the edition information (or layout information) are transmitted from a single transmission terminal to a server, the contents information and the edition information (or layout information) may be separately transmitted from two or more transmission terminals to the server. Figure 18 is a diagram illustrating the construction of a data communication system in which the contents information and the edition information (or layout information) are separately transmitted from two or more transmission terminals to a server. In figure 18, 141' denotes a second transmission terminal such as a handy phone having an image pickup function. In the data communication system, the second transmission terminal 141', such as a handy phone having an image pickup function, transmits contents information, such as video and audio recorded at the terminal 141', as a transmission signal C' to a server 142. On the other hand, a first transmission terminal 141, such as a personal computer, transmits layout information or the like as a transmission signal C to the server 142. On receipt of these signals C and C', the server 142 edits the contents information supplied from the second transmission terminal 141' on the basis of the layout information supplied from the first transmission terminal 141, to create document data as multimedia data, and transmits display data for display of this multimedia document as a transmission signal D to the first transmission terminal 141 having a display function. The operation of the system other than mentioned above is identical to that of the data communication system shown in figure 8.

## Claims

1. A transmission terminal device for transmitting document data corresponding to a desired document, through an information processing server, to a reception terminal as a destination, said device comprising:
an information creation unit for creating contents information corresponding to contents of the document, and edition information for edition of the contents information, according to information inputting operation;
an information transmitter for transmitting the contents information and the edition information to the information processing server;
a display data receiver for receiving display data for display of the document, which is transmitted from the information processing server; and
a display unit for displaying the document on the basis of the display data.

2. The transmission terminal device of Claim 1 wherein:
said information creation unit comprises:
a contents information creation section for creating the contents information; and
a layout information storage section for holding various kinds of layout information indicating layouts of the contents in the document;
specific layout information is read from the layout information storage section, as the edition information; and
said information transmitter comprises:
a layout information transmission section for transmitting the layout information read from the layout information storage unit, to the information processing server; and
a contents information transmission section for transmitting the contents information created in the contents creation section, to the information processing server.

3. The transmission terminal device of Claim 1, wherein said information transmitter has a transfer information transmission section for transmitting transfer information which designates a server as a destination of the document data created by the information processing server, to the information processing server.

4. A data distribution system for receiving transmission information supplied from a transmission terminal, generating document data corresponding to a desired document on the basis of the transmission information, and distributing the document data to a reception terminal as a destination, said system comprising:
an information receiver for receiving the transmission information supplied from the transmission terminal;
a data edition unit for generating the document data on the basis of the received transmission information;
a display data transmitter for transmitting display data for display of the document, to the transmission terminal;
a first data transmitter for transmitting first data as a component of the document data, to the destination reception terminal; and
a second data transmitter having a data storage section to hold second data as a component of the document data, and transmitting the second data to the destination reception terminal according to a data request from the destination reception terminal.

5. The data distribution system of Claim 4 wherein:
said information receiver receives, as the transmission information from the transmission terminal, contents information corresponding to contents of the document and layout information indicating the layout of the contents in the document; and
said data edition unit edits the contents information on the basis of the layout information to generate the document data.

6. The data distribution system of Claim 4 further including a display data transmitter for transmitting display data for display of the document, to the transmission terminal.

7. A data distribution system having a transmission-side server for receiving transmission information supplied from a transmission terminal and creating document data corresponding to a desired document on the basis of the transmission information, and a reception-side server for relaying the document data to distribute it to a reception terminal as a destination, wherein:
said transmission-side server comprises:
an information receiver for receiving the transmission information from the transmission terminal;
a data edition unit for generating the document data on the basis of the transmission information;
a first data transmitter for transmitting first data as a component of the document data, to the destination reception terminal; and
a first data storage unit for holding second data as a component of the document data; and
said reception-side server comprises:
a second data storage unit for holding the second data supplied from the transmission-side server; and
a second data transmitter for transmitting the second data stored in the second data storage unit to the destination reception terminal, according to a data request from the reception terminal.

8. The data distribution system of Claim 7, wherein:
the information receiver in the transmission-side server receives, as the transmission information from the transmission terminal, contents information corresponding to contents of the document, and layout information indicating the layout of the contents; and
the data edition unit in the transmission-side server edits the contents information on the basis of the layout information to generate the document data.

9. The data distribution system of Claim 7, wherein said transmission-side server is provided with a display data transmitter for transmitting display data for display of the document, to the transmission terminal.

10. A data distribution system for receiving transmission information supplied from a transmission terminal, creating document data corresponding to a predetermined document on the basis of the transmission information, and distributing the document data to a reception terminal as a destination, said system comprising:
an information receiver for receiving the transmission information from the transmission terminal;
a layout information storage unit for holding plural pieces of layout information indicating examples of layouts of the contents in the document;
a data edition unit for editing the contents information on the basis of the transmission information and the layout information designated by the transmission information;
a first data transmitter for transmitting first data as a component of the document data, to the destination reception terminal; and
a second data transmitter having a data storage unit for holding second data as a component of the document, and transmitting the second data to the destination reception terminal according to a data request from the reception terminal.

11. The data distribution system of Claim 10, wherein:
said information receiver receives, as the transmission information from the transmission terminal, contents information corresponding to the contents of the document, and layout designation information which designates a layout of the contents in the document information; and
the data edition unit edits the contents information on the basis of the layout information designated by the layout designation information to generate the document data.

12. The data distribution system of Claim 10 further includes a display data transmitter for transmitting display data for display of the document, to the transmission terminal.

13. A data distribution system having a transmission-side server for receiving transmission information supplied from a transmission terminal and creating document data corresponding to a desired document on the basis of the transmission information, and a plurality of reception-side servers for relaying the document data to distribute it to a reception terminal as a destination, wherein:
said transmission-side server comprises:
an information receiver for receiving the transmission information from the transmission terminal;
a layout information storage unit for holding plural pieces of layout information indicating examples of layouts of contents in the document;
a data edition unit for editing the contents information on the basis of the transmission information and the layout information designated by the transmission information to generate the document data;
a first data transmitter for transmitting first data as a component of the document data, to the destination reception terminal; and
a first data storage unit for holding second data as a component of the document data; and
each of said reception-side servers is provided with a second data storage unit for holding the second data supplied from the transmission-side server, and transmits the second data stored in the second data storage unit to the destination reception terminal, according to a data request from the reception terminal.

14. The data distribution system of Claim 13, wherein said transmission-side server is provided with a transfer information receiver for receiving transfer information supplied from the transmission terminal, said transfer information designating a reception-side server as a destination of the second data stored in the first data storage unit, and the second data is transmitted to the reception-side server designated by the transfer information.

15. The data distribution system of Claim 13, wherein said transmission-side server is provided with a transfer information receiver for receiving transfer information supplied from the reception terminal, said transfer information designating a reception-side server as a destination of the second data stored in the first data storage unit, and the second data is transmitted to the reception-side server designated by the transfer information.

16. A reception terminal device for receiving document data corresponding to a specific document, which is obtained by edition in an information processing server on the basis of transmission information supplied from a transmission terminal, said device comprising:
a first receiver for receiving first data as a component of the document data;
a first data decoder for decoding the first data, and generating data acquisition information for obtaining second data as a component of the document data;
an acquisition information transmitter for transmitting the data acquisition information to the information processing server;
a second data receiver for receiving the second data transmitted from the information processing server in response to the transmission of the data acquisition information to the information processing server;
a second decoder for decoding the second data; and
a display unit for displaying the contents constituting the document, on the basis of the decoded first and second data.

17. The reception terminal device of Claim 16 further includes a transfer information transmitter for transmitting transfer information designating a destination server to which the second data is to be transmitted, to the information processing server.

18. The data distribution system according to any of Claims 4, 9, and 12, wherein said display data transmitter transmits, as the display data for display of the document data, a display program including edition data generated in the data edition unit, or image data indicating the edited document data in the static state, or a digest of the edited document data.
